# EUROPEAN PATENT APPLICATION

(11) **EP 4 684 709 A1**
(43) Date of publication of application: **28.01.2026**
(21) Application number: 23897086.7
(22) Date of filing: 20.03.2023
(51) Int. Cl.: A47K 3/28, B05B 1/12, F16K 11/044, E03C 1/046

(54) **WATER DISCHARGE DEVICE**

(71) Applicant: LIXIL Corporation, Tokyo 141-0033 (JP)
(72) Inventor: OTA, Noritoshi, Tokyo 141-0033 (JP)
(74) Representative: karo IP
(86) International application number: PCT/JP2023/010866
(87) International publication number: WO 2024/116425

(57) **Abstract**

A water discharge device includes a switcher 3 that includes a branch flow path 30 that branches supplied water into a first flow path 31 and a second flow path 32, a diaphragm valve 43 that opens and closes the first flow path 31 and that separates the first flow path 31 and the second flow path 32, a valve seat 42 that is formed in the first flow path 31 and on which the diaphragm valve 43 is seated, and an on-off valve 23 that opens and closes the second flow path 32. When the on-off valve 23 is placed in a closed state, the diaphragm valve 43 is separated from the valve seat 42, and water flows to the downstream side through the first flow path 31. When the on-off valve 23 is placed in an open state, the diaphragm valve 43 is seated on the valve seat 42 and blocks the flow in the first flow path 31, and water flows to the downstream side through the second flow path 32.

## Description

### TECHNICAL FIELD

The present disclosure relates to a water discharge device.

### BACKGROUND ART

Patent Literature 1 discloses a conventional foam supply device for a bathroom. This foam supply device for a bathroom includes a case, a flow path, a switching unit (three-way valve), and an operation unit. The case forms a water inlet and a foam outlet. The flow path connects the water inlet and the foam outlet. The switching unit is built into the case and switches the form of the outflow from the foam outlet to either water or foam. The operation unit operates the switching unit. The operation unit includes a grip part that can be moved back and forth between a position above the top of the case and a position in front of the front of the case.

### RELATED-ART LITERATURE

### PATENT LITERATURE

Patent Literature 1: Japanese Patent Application Laid-Open Publication No. 2022-142828

### SUMMARY OF INVENTION

### TECHNICAL PROBLEM

The inventor of the subject application examined the configuration of a flow path switching portion provided in a device for discharging while switching between water and foam and obtained the following new recognition. The device described in Patent Literature 1 requires a space where the grip part of the operation unit can move back and forth outside the case to operate the switching unit constituted by a three-way valve, which is disadvantageous to the overall downsizing of the device.

A purpose of the present disclosure is to provide a water discharge device that can switch the flow path with a single on-off valve and is advantageous for downsizing.

### SOLUTION TO PROBLEM

To solve the abovementioned issue, one embodiment of the present disclosure is a water discharge device. The water discharge device according to the one embodiment includes a switcher that includes a branch flow path that branches supplied water into a first flow path and a second flow path, a diaphragm valve that opens and closes the first flow path and that separates the first flow path and the second flow path, a valve seat that is formed in the first flow path and on which the diaphragm valve is seated, and an on-off valve that opens and closes the second flow path. When the on-off valve is placed in a closed state, the diaphragm valve is separated from the valve seat, and water flows to the downstream side through the first flow path. When the on-off valve is placed in an open state, the diaphragm valve is seated on the valve seat and blocks the flow in the first flow path, and water flows to the downstream side through the second flow path.

### BRIEF DESCRIPTION OF DRAWINGS

[Fig. 1] Fig. 1 is an external perspective view of a water discharge device according to an embodiment.
[Fig. 2] Fig. 2 is an external perspective view of a portion of the inside of the water discharge device.
[Fig. 3] Fig. 3 is a block diagram that shows an illustrative configuration of a water passage system and an electrical circuit system of the water discharge device.
[Fig. 4] Fig. 4 is an external perspective view of a switcher.
[Fig. 5] Fig. 5 is a longitudinal sectional view of the switcher.
[Fig. 6] Fig. 6 is a longitudinal sectional view that shows a state of water flowing through a first flow path in the switcher.
[Fig. 7] Fig. 7 is a longitudinal sectional view that shows a state of water flowing through a second flow path in the switcher.

### DESCRIPTION OF EMBODIMENTS

There will now be described an embodiment for implementing a water discharge device of the present disclosure. Like reference characters denote like constituting elements, and repetitive description will be omitted. In each drawing, constituting elements may be appropriately omitted, enlarged, or reduced, for the sake of convenience. Each drawing is to be viewed according to the orientation of the reference characters. The structures and shapes referred to in the present specification include not only structures and shapes that exactly match what is mentioned in the present specification, but also structures and shapes that deviate by the amount of errors, such as dimensional errors and manufacturing errors. Further, in each drawing, part of a member less important in describing the embodiment may be omitted.

Terms including ordinal numbers, such as "first" and "second", are used to describe various constituting elements. However, such terms are used only to distinguish one constituting element from another and do not limit the configuration of the present disclosure. Also, the following embodiment is provided as an example to assist in understanding of the present disclosure and does not limit the configuration of the present disclosure.

### Embodiment

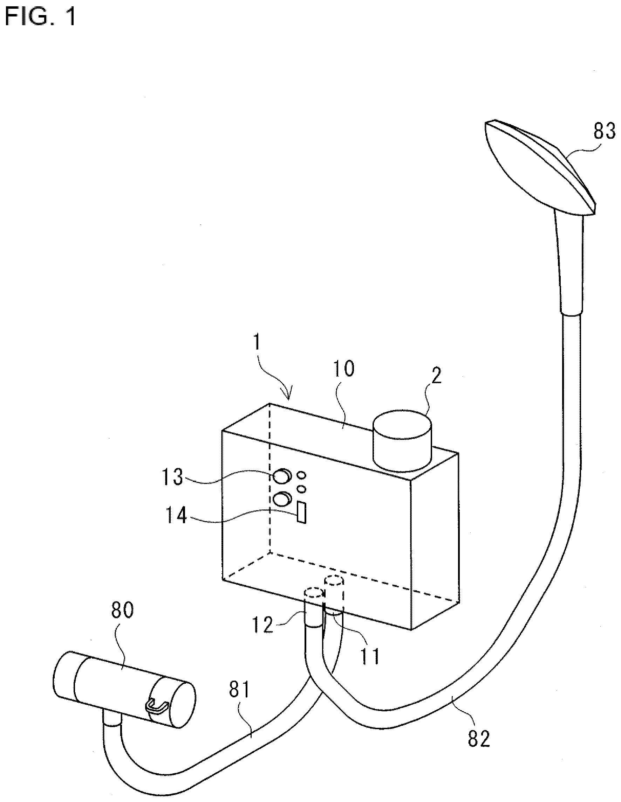

Fig. 1 is now referred to. A water discharge device 1 has a case 10 of rectangular parallelepiped shape that houses piping and various components. To a water supply inlet 11 of the water discharge device 1, a hose 81 extending from a water supply device 80 is connected, and water is supplied from the water supply device 80. The water supply device 80 has, for example, a temperature control function, a flow rate control function, and a function for switching between passing water and stopping water.

To a discharge outlet 12 of the water discharge device 1, a hose 82 of a shower head 83 is connected. The water discharge device 1 discharges one of water or foam through the discharge outlet 12, and the one of water or foam is discharged through the hose 82 and the shower head 83 to the outside. The water discharge device 1 may be connected to a device other than the shower head 83. Also, the water discharge device 1 may directly discharge one of water or foam to the outside. The water discharge device 1 may be configured to include a component for discharging, such as the shower head 83. The water discharge device 1 may have all of the functions of the water supply device 80. Also, the water discharge device 1 may have some of the functions of the water supply device 80.

In the water discharge device 1, a liquid replenishment container 2 is detachably connected to replenish a liquid containing a foaming component. On the front of the case 10, an operation button 13, which can be operated by the user, and an indicator 14, which can be viewed by the user, are provided. The indicator 14 is constituted by a component such as an LED or a liquid crystal display. The size of the case 10 is, for example, about 15 cm in height, 20 cm in width, and 5 cm in depth. The size of the case 10 is not limited thereto.

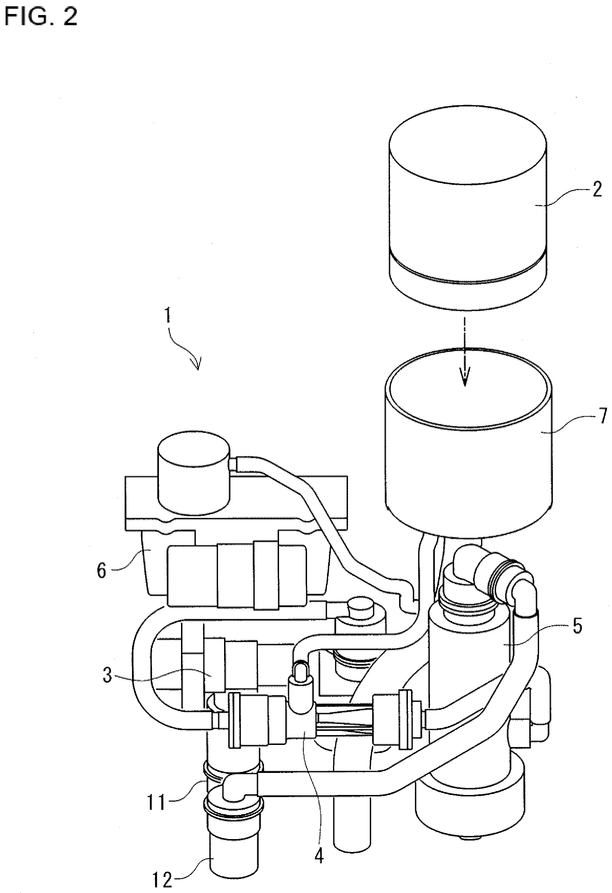

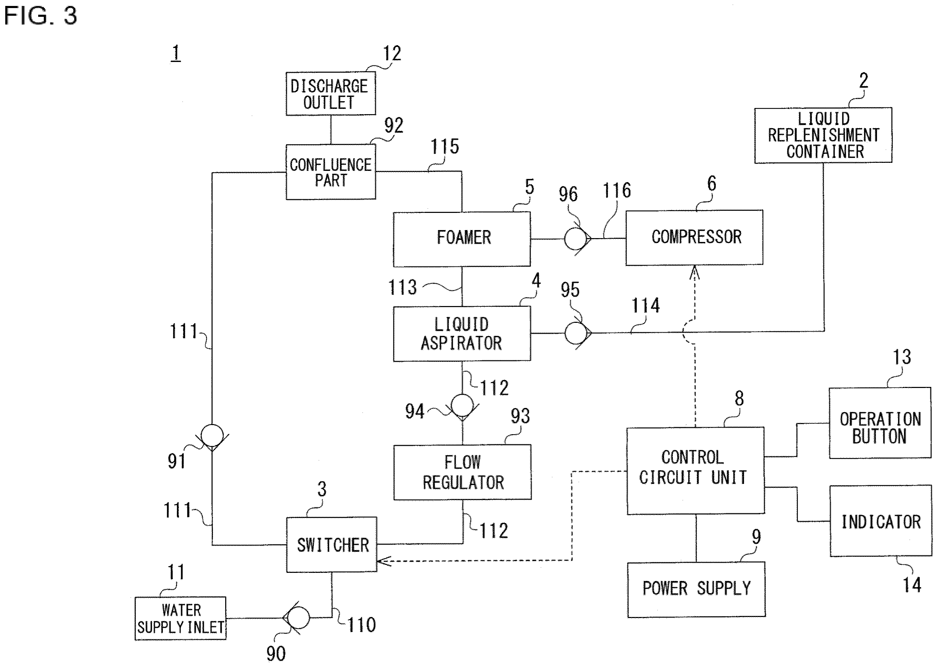

Fig. 2 and Fig. 3 are now referred to. The water discharge device 1 includes a switcher 3, a liquid aspirator 4, a foamer 5, a compressor 6, a container mounting unit 7, a control circuit unit 8, and a power supply 9, for example. To the downstream side of the water supply inlet 11 is connected a check valve 90, and the check valve 90 and the switcher 3 are connected by a flow path 110. The check valve 90 prevents backflow of water from the flow path 110 to the water supply inlet 11 side.

The switcher 3 switches passing water through a flow path 111 and a flow path 112 in two directions, which branch off from the flow path 110. One flow path 111 is connected to a confluence part 92. A check valve 91 provided in the flow path 111 prevents backflow from the confluence part 92 side to the switcher 3 side. In the other flow path 112, a flow regulator 93 and a check valve 94 are provided. The flow path 112 is connected to the liquid aspirator 4. The flow regulator 93 is constituted by a constant flow valve, a pressure reducing valve, or the like. The flow regulator 93 adjusts the flow rate on the downstream side to about 1 liter per minute, for example. The check valve 94 prevents backflow from the liquid aspirator 4 side to the switcher 3 side.

The liquid aspirator 4 is, for example, an ejector. The liquid aspirator 4 aspirates the liquid replenished from the liquid replenishment container 2 to mix it with the water flowing in from the flow path 112 and then flows the mixture into a flow path 113 on the downstream side. The liquid replenishment container 2 and the liquid aspirator 4 are connected by a flow path 114. In the flow path 114, a check valve 95 is provided to prevent backflow from the liquid aspirator 4 side to the liquid replenishment container 2 side.

The flow path 113 is connected to the foamer 5. Through the flow path 113, the mixed water, which is a mixture of the liquid containing a foaming component and water, is supplied to the foamer 5. The foamer 5 generates foam by mixing compressed air from the compressor 6 with the mixed water supplied from the flow path 113 and flows the foam into a flow path 115. The compressor 6 sends compressed air to the foamer 5 through a flow path 116 for air. In the flow path 116, a check valve 96 is provided to prevent backflow from the foamer 5 side to the compressor 6 side.

The confluence part 92 is a flow path that joins the flow path 111 and the flow path 115 and connects to the discharge outlet 12. As described previously, the hose 82 of the shower head 83 is connected to the discharge outlet 12.

The control circuit unit 8 receives power supply from the power supply 9 and operates the switcher 3 and the compressor 6, for example. The power supply 9 is one of various batteries, such as a lithium-ion battery. The power supply 9 may be constituted by a power supply circuit for using electricity supplied from a household power supply. The control circuit unit 8 receives operation input from the operation button 13 connected thereto and operates the switcher 3 and the compressor 6, for example. The control circuit unit 8 also allows the indicator 14 to indicate information, such as the operating state of the water discharge device 1 or the remaining amount of the power supply 9.

The water discharge device 1 discharges the water supplied from the water supply device 80, through the discharge outlet 12 via the flow path 111, without generating foam. Also, depending on the switching by the switcher 3, the water discharge device 1 generates foam through the flow paths 112, 113, and 115 and discharges the foam through the discharge outlet 12. The foamer 5 forms fine bubbles, so that the water discharge device 1 discharges fine foam.

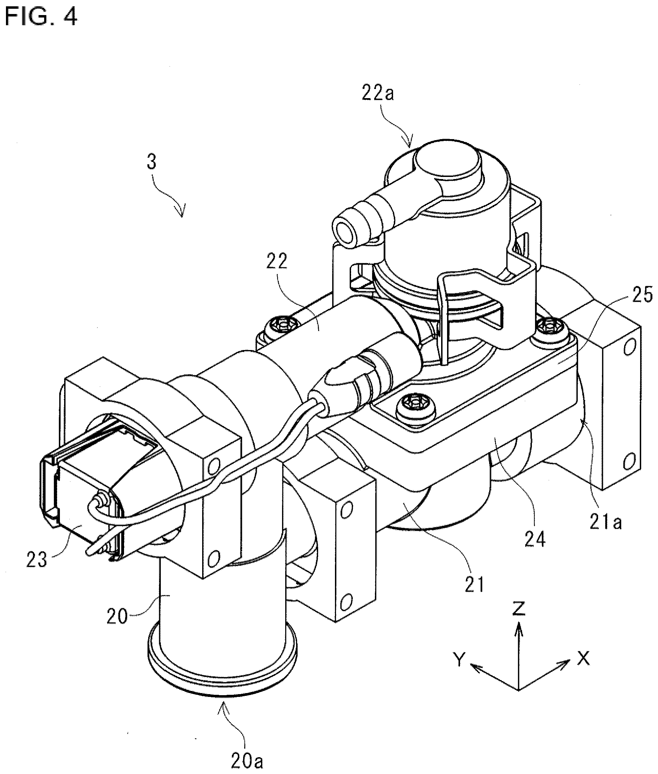

Fig. 4 is now referred to. The switcher 3 includes a branch flow path portion 20, a first flow path portion 21, a second flow path portion 22, and an on-off valve 23. The branch flow path portion 20 includes a flow inlet 20a connected to the water supply inlet 11 described above, and the on-off valve 23. The branch flow path portion 20 switches and sends the water flowing in from the flow inlet 20a to one of the first flow path portion 21 or the second flow path portion 22.

The first flow path portion 21 sends the water flowing in from the branch flow path portion 20 to the downstream side through a flow outlet 21a. The flow outlet 21a of the first flow path portion 21 is connected to the aforementioned flow path 111 side. The second flow path portion 22 sends the water flowing in from the branch flow path portion 20 to the downstream side through a flow outlet 22a. The flow outlet 22a of the second flow path portion 22 is connected to the aforementioned flow path 112 side.

For the sake of convenience, as shown in the figure, directions in which the first flow path portion 21 and the second flow path portion 22 extend on a horizontal plane will be referred to as X directions, left and right directions perpendicular to the X directions on the horizontal plane will be referred to as Y directions, and vertical up and down directions will be referred to as Z directions. An X direction, a Y direction, and a Z direction are perpendicular to each other. This is not limited to the case where they are strictly perpendicular but also includes the case where they are nearly perpendicular.

The first flow path portion 21 includes a housing 24 for supporting a diaphragm valve, which will be described later. The second flow path portion 22 includes a lid 25 that supports the diaphragm valve and seals the housing 24. The housing 24 and the lid 25 are rectangular in plan view.

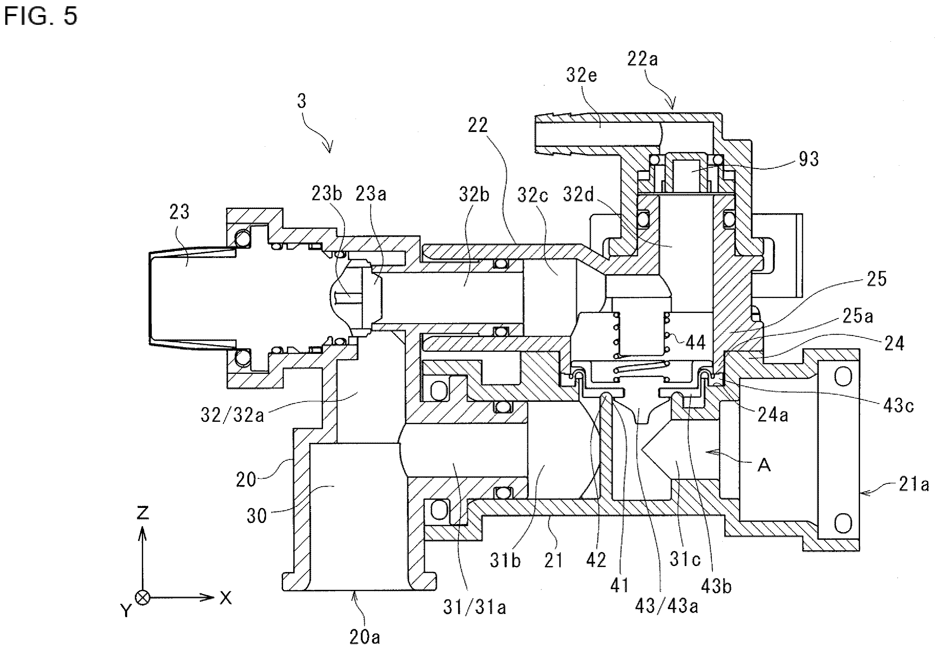

Fig. 5 is now referred to. A branch flow path 30 formed in the branch flow path portion 20 branches the flow of water into a first flow path 31a and a second flow path 32a in two directions. The first flow path 31a extends in the +X direction. The second flow path 32a extends in the +Z direction. The second flow path 32a is connected to a second flow path 32b extending in the +X direction. The branch flow path 30, the first flow path 31a, and the second flow paths 32a and 32b are formed in the branch flow path portion 20.

The first flow path 31a, a first flow path 31b, and a first flow path 31c formed from the upstream side to the downstream side in the switcher 3 are collectively referred to as a first flow path 31. The second flow path 32a, the second flow path 32b, a second flow path 32c, a second flow path 32d, and a second flow path 32e formed from the upstream side to the downstream side in the switcher 3 are collectively referred to as a second flow path 32.

The first flow path 31a formed in the branch flow path portion 20 is connected to the first flow path 31b extending in the +X direction. In the first flow path portion 21, the first flow paths 31b and 31c are formed. The first flow path 31c is provided such as to extend from a valve hole 41 in the -Z direction and then extend in the +X direction. Between the first flow path 31b on the upstream side and the first flow path 31c on the downstream side, the valve hole 41, a valve seat 42 on which the valve hole 41 is formed, and a diaphragm valve 43 that opens and closes the valve hole 41 are provided. The diaphragm valve 43 is constituted by a valve plug 43a and a diaphragm 43b.

A circumferential edge part 43c of the diaphragm 43b is disposed on a bottom part 24a of the housing 24 of the first flow path portion 21 and is sandwiched between the bottom part 24a and a pressing part 25a extending from the lid 25 of the second flow path portion 22. The diaphragm valve 43 is supported such as to be sandwiched between the bottom part 24a of the housing 24 and the pressing part 25a of the lid 25.

The diaphragm valve 43 separates the first flow path 31 and the second flow path 32. In the diaphragm valve 43, the area of a surface exposed to the first flow path 31b side is smaller than the area of a surface exposed to the second flow paths 32c and 32d side. The diaphragm valve 43 is pressed by an elastic body 44 such as a spring, in the direction of being seated on the valve seat 42.

When the diaphragm valve 43 is away from the valve seat 42, water passes through the first flow paths 31b and 31c and flows to the downstream side through the flow outlet 21a. When the diaphragm valve 43 is seated on the valve seat 42, the first flow path 31 is blocked, and water cannot flow through.

The on-off valve 23 may be a solenoid valve, for example. The on-off valve 23 opens and closes the flow of water into the second flow path 32 by driving a valve plug 23a and a valve rod 23b so that the valve plug 23a and the valve rod 23b can move forward and backward. The second flow path 32a is continuous to the second flow path 32b located on the downstream side of the on-off valve 23. In the second flow path portion 22, the second flow paths 32c, 32d and 32e are formed. The second flow path 32c is formed to extend in the + direction. The second flow path 32d is connected to the second flow path 32c and formed to extend in the +Z direction.

The diaphragm valve 43 forms, midway along a flow path constituted by the second flow paths 32c and 32d, part of a wall part of the flow path. The flow path constituted by the second flow paths 32c and 32d functions to provide back pressure to the diaphragm valve 43.

The second flow path 32d is connected to the second flow path 32e in the flow outlet 22a. The second flow path 32e is formed to extend in the -X direction and is connected to the flow path 112 side shown in Fig. 3. The flow outlet 22a is formed in the shape of a cap and fitted to the downstream end of the second flow path 32d. In the flow outlet 22a, the flow regulator 93 is provided. The flow regulator 93 may be a constant flow valve of a rubber orifice type, for example, and functions to maintain a constant flow rate on the downstream side.

The branch flow path portion 20, the first flow path portion 21, and the second flow path portion 22 are structured to be assembled by interconnecting joint pipe portions. The second flow path portion 22 is fitted to the first flow path portion 21 by disposing the diaphragm valve 43 on the housing 24 of the first flow path portion 21, installing the elastic body 44 and the like, and covering the housing 24 with the lid 25.

The branch flow path portion 20 is attached to the assembly of the first flow path portion 21 and the second flow path portion 22 such as to be inserted from the -X direction. A tubular portion in which the first flow path 31a is formed in the branch flow path portion 20 is inserted into a tubular portion in which the first flow path 31b is formed in the first flow path portion 21. A tubular portion in which the second flow path 32b is formed in the branch flow path portion 20 is inserted into a tubular portion in which the second flow path 32c is formed in the second flow path portion 22.

In an installed state where the water discharge device 1 is mounted on a wall or the like in a bathroom, for example, the second flow path 32d is located above the diaphragm valve 43. In the installed state, a positional relationship in which the flow outlet 22a connected to the downstream side of the second flow path 32d is located above the diaphragm valve 43 is suitable.

The minimum cross-sectional area S2 of the flow path cross-section in the second flow paths 32d and 32e located on the downstream side of the diaphragm valve 43 may suitably be smaller than the minimum cross-sectional area S1 of the flow path cross-section in the first flow path 31c located on the downstream side of the diaphragm valve 43. In the example shown in Fig.5, the area of the flow path cross-section in the first flow path 31c located on the downstream side of the diaphragm valve 43 is minimum in the vicinity of a midway A in the first flow path 31c. The flow path cross-section means a cross-section perpendicular to the direction in which water flows through the flow path.

The area of the flow path cross-section in the second flow paths 32d and 32e located on the downstream side of the diaphragm valve 43 is minimum in at least one of the second flow path 32e or the flow regulator 93. The minimum cross-sectional area of the flow path cross-section may be the same in the second flow path 32e and in the flow regulator 93. When the flow regulator 93 is not provided in the second flow path 32d, the area of the flow path cross-section in the second flow paths 32d and 32e located on the downstream side of the diaphragm valve 43 is minimum in the second flow path 32e.

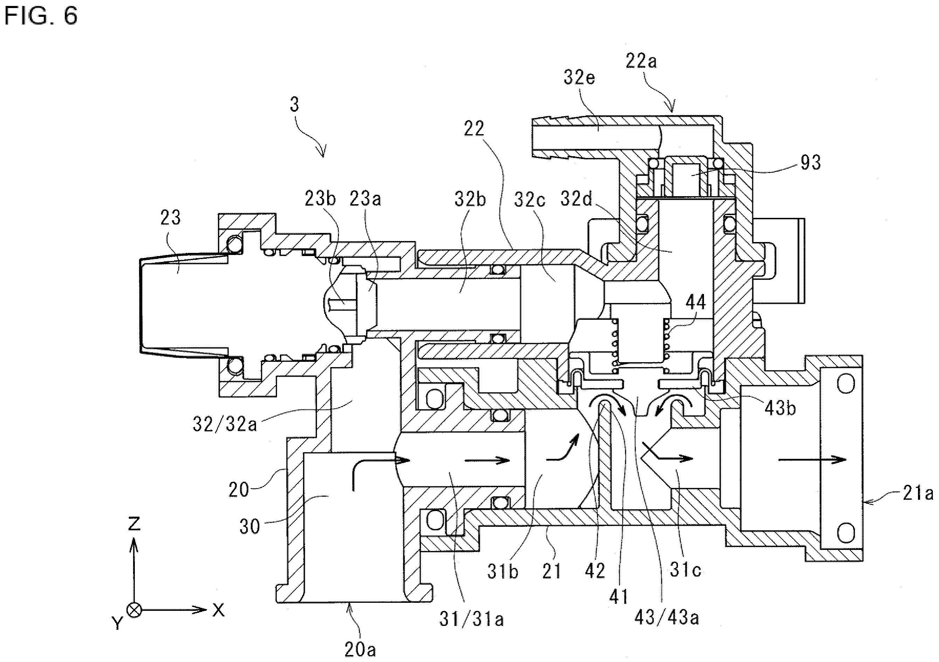

There will now be described flow path switching operation performed by the switcher 3. Fig. 6 is now referred to. When the on-off valve 23 is placed in a closed state, the flow of water to the second flow path 32 side is blocked, and the water flows to the first flow path 31 side. When the force applied to the diaphragm valve 43 due to the water pressure in the first flow path 31b becomes greater than the pressing force of the elastic body 44, the diaphragm valve 43 is separated from the valve seat 42. As the diaphragm valve 43 is separated from the valve seat 42, the first flow path 31b on the upstream side of the valve hole 41 and the first flow path 31c on the downstream side thereof are connected, so that the water flows into the first flow path 31c and then flows out through the flow outlet 21a, as indicated by the arrows in Fig. 6.

When the water supply to the flow inlet 20a stops, the water pressure in the first flow path 31b decreases, and the diaphragm valve 43 is pressed by the elastic body 44 and seated on the valve seat 42. When the diaphragm valve 43 is seated on the valve seat 42, the first flow path 31b on the upstream side of the valve hole 41 and the first flow path 31c on the downstream side thereof are disconnected from each other.

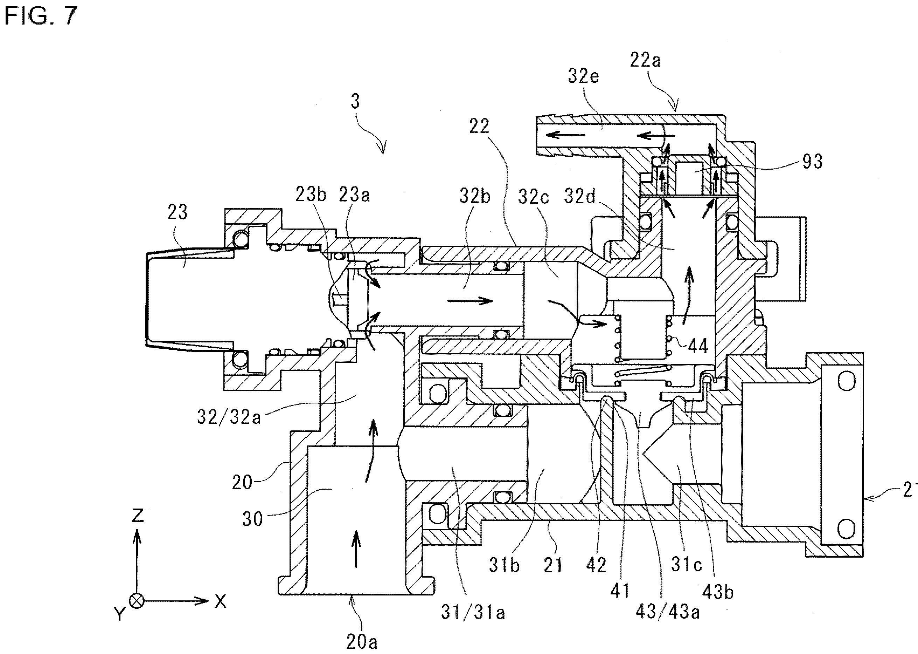

Fig. 7 is now referred to. When the on-off valve 23 is placed in an open state and water is supplied through the flow inlet 20a, the water flows into both the first flow path 31b and the second flow paths 32c and 32d. The area of the diaphragm valve 43 that receives water pressure is larger on the second flow paths 32c and 32d side than on the first flow path 31b side. Therefore, the diaphragm valve 43 is pressed to the valve seat 42 side by the water pressure.

The diaphragm valve 43 is pressed to the valve seat 42 side by the water pressure and the elastic body 44, so that the diaphragm valve 43 is seated on the valve seat 42, and the first flow path 31 side is shut off. On the second flow path 32 side, since the on-off valve 23 is in the open state, the water flows into the second flow path 32e on the downstream side and then flows out through the flow outlet 22a, as indicated by the arrows in Fig. 7.

When the on-off valve 23 is placed in the open state from the closed state while water is supplied through the flow inlet 20a, the state changes such that the water flows through the first flow path 31 side, the first flow path 31 side is shut off, and the water flows through the second flow path 32 side.

In the water discharge device 1, when the on-off valve 23 of the switcher 3 is placed in the closed state, the diaphragm valve 43 is separated from the valve seat 42, and water flows to the downstream side through the first flow path 31. In the water discharge device 1, when the on-off valve 23 of the switcher 3 is placed in the open state, the diaphragm valve 43 is seated on the valve seat 42, and water flows to the downstream side through the second flow path 32. The water discharge device 1 can switch passing water through two flow paths with a single on-off valve 23, which is advantageous for downsizing and enables cost reduction. In the water discharge device 1, when the on-off valve 23 is constituted by a device that functions electrically, such as a solenoid valve, the electric circuit and control program for controlling the on-off valve 23 can be simplified.

The minimum cross-sectional area S2 of the flow path cross-section in the second flow path 32 located on the downstream side of the diaphragm valve 43 is smaller than the minimum cross-sectional area S1 of the flow path cross-section in the first flow path 31 located on the downstream side of the diaphragm valve 43. In the water discharge device 1, when water flows through the second flow path 32, larger back pressure can be held on the second flow path 32 side of the diaphragm valve 43.

In the switcher 3 of the water discharge device 1, against the force applied to the diaphragm valve 43 from the first flow path 31 side, larger back pressure is applied to the diaphragm valve 43 from the second flow path 32 side, thereby stabilizing the flow path switching and improving the response performance. When the water supply pressure fluctuates while water flows through the second flow path 32, the switcher 3 can stabilize stopping water on the first flow path 31 side.

The water discharge device 1 mixes an additive with the water on the downstream side of the flow outlet 22a of the second flow path 32. The additive is, for example, a liquid containing a foaming component, as described previously. The water discharge device 1 switches to passing water through the first flow path 31 to discharge water and switches to passing water through the second flow path 32 to discharge water containing the additive. By making the minimum cross-sectional area S1 larger than the minimum cross-sectional area S2, the water discharge device 1 reduces the pressure loss on the first flow path 31 side and allows the use of water with no additive at a high flow rate.

In the installed state, the flow outlet 22a of the second flow path 32 is located above the diaphragm valve 43. In the switcher 3, by disposing the flow outlet 22a above the diaphragm valve 43, occurrence of air accumulation on the second flow path 32 side of the diaphragm valve 43 can be suppressed, and generation of abnormal noise at the time of switching the flow path can also be suppressed.

In the flow outlet 22a of the second flow path 32, the flow regulator 93 is disposed. In the switcher 3, by means of the flow regulator 93, larger back pressure can be held on the second flow path 32 side of the diaphragm valve 43 when water flows through the second flow path 32. Also, in the switcher 3, against the force applied to the diaphragm valve 43 from the first flow path 31 side, larger back pressure is applied to the diaphragm valve 43 from the second flow path 32 side, thereby stabilizing the flow path switching and improving the response performance.

In the second flow path 32 in the switcher 3, the portion where high water pressure is applied can be localized in a portion on the upstream side near the flow regulator 93, so that the risk of water leakage can be reduced by applying local leakage prevention measures.

In the water discharge device 1, the flow path 111 located downstream of the flow outlet 21a of the first flow path 31 and the flow path 112 located downstream of the flow outlet 22a of the second flow path 32 merge together, so that the water is discharged to the outside through a single discharge outlet 12. To the discharge outlet 12 of the water discharge device 1, the hose 82 of the shower head 83 is connected, for example. The water discharge device 1 can switch the discharge of water from a commonly used device, such as the shower head 83, between the discharge of water and the discharge of water containing an additive, for example, thereby improving user convenience.

In the water discharge device 1, the check valve 91 is disposed on the downstream side of the valve seat 42 in the first flow path 31. When clogging occurs in the shower head 83 or the like connected to the discharge outlet 12, for example, the water discharge device 1 suppresses backflow from the second flow path 32 side to the first flow path 31 side and prevents switching from becoming impossible.

The diaphragm valve 43 of the switcher 3 is supported such as to be sandwiched between the first flow path portion 21, which forms the first flow path 31, and the second flow path portion 22, which forms the second flow path 32. In the switcher 3, the support structure for the diaphragm valve 43 is constituted by a small number of parts, which enables cost reduction and downsizing.

### Modifications

The on-off valve 23 is not limited to a solenoid valve, and publicly-known valve devices configured based on various methods can be used. Also, the flow regulator 93 is not limited to a constant flow valve of a rubber orifice type, and publicly-known flow rate limiting devices configured based on various methods can be used. The flow regulator 93 may be provided on the downstream side of the flow outlet 22a.

The posture of the switcher 3 in the installed state where the water discharge device 1 is mounted on a wall or the like in a bathroom is not limited to the case shown in Fig. 4 and Fig. 5 and may be any posture. As described previously, from the viewpoint of suppressing occurrence of air accumulation on the second flow path 32 side of the diaphragm valve 43 and preventing generation of abnormal noise, it is suitable to use the switcher 3 in an installed state where the flow outlet 22a is positioned above the diaphragm valve 43 in the Z direction.

The branch flow path portion 20, the first flow path portion 21, and the second flow path portion 22 may have a structure to be assembled other than the structure to be assembled by interconnecting joint pipe portions.

Optional combinations of constituting elements described above are also effective as aspects of the technical ideas abstracted from the embodiment and modifications. For example, with an embodiment, an arbitrary matter described in another embodiment may be combined. Also, with a modification, an arbitrary matter described in an embodiment or another modification may be combined.

An embodiment and modifications have been described. In understanding the technical ideas abstracted from the embodiment and modifications, the technical ideas should not be interpreted as limited to the contents of the embodiment and modifications. Each of the aforementioned embodiment and modifications merely describes a specific example, and various design modifications, including changes, addition, and deletion of constituting elements, may be made thereto. In the embodiment, matters to which design modifications may be made are emphasized with the expression of "embodiment". However, design modifications may also be made to matters without such expression. Also, the hatching provided on the cross sections in the drawings does not limit the materials of the objects with the hatching.

When the technical ideas embodied by the embodiment and modifications set forth above are generalized, it can be said that the technical ideas described in the following items are included.

Item 1 is a water discharge device including a switcher that includes a branch flow path that branches supplied water into a first flow path and a second flow path, a diaphragm valve that opens and closes the first flow path and that separates the first flow path and the second flow path, a valve seat that is formed in the first flow path and on which the diaphragm valve is seated, and an on-off valve that opens and closes the second flow path, wherein, when the on-off valve is placed in a closed state, the diaphragm valve is separated from the valve seat, and water flows to the downstream side through the first flow path, and wherein, when the on-off valve is placed in an open state, the diaphragm valve is seated on the valve seat and blocks the flow in the first flow path, and water flows to the downstream side through the second flow path.

Item 2 is the water discharge device according to Item 1, wherein a minimum cross-sectional area of a flow path cross-section in the second flow path located on the downstream side of the diaphragm valve is smaller than a minimum cross-sectional area of a flow path cross-section in the first flow path located on the downstream side of the diaphragm valve.

Item 3 is the water discharge device according to one of Item 1 or Item 2, wherein an additive is mixed with water on the downstream side of a flow outlet of the second flow path.

Item 4 is the water discharge device according to any one of Item 1 through Item 3, wherein the flow outlet is located above the diaphragm valve in an installed state.

Item 5 is the water discharge device according to any one of Item 1 through Item 4, wherein a flow regulator is disposed in the flow outlet.

Item 6 is the water discharge device according to any one of Item 1 through Item 5, wherein a flow path located downstream of a flow outlet of the first flow path and a flow path located downstream of the flow outlet of the second flow path merge together, and water is discharged to the outside through a single discharge outlet.

Item 7 is the water discharge device according to any one of Item 1 through Item 6, wherein a check valve is disposed on the downstream side of the valve seat in the first flow path.

Item 8 is the water discharge device according to any one of Item 1 through Item 7, wherein the diaphragm valve is supported such as to be sandwiched between a first flow path portion that forms the first flow path and a second flow path portion that forms the second flow path.

### INDUSTRIAL APPLICABILITY

The present disclosure relates to a water discharge device and is applicable to water discharge devices.

### REFERENCE SIGNS LIST

1 water discharge device, 3 switcher, 12 discharge outlet, 21 first flow path portion, 21a flow outlet, 22 second flow path portion, 22a flow outlet, 23 on-off valve, 30 branch flow path, 31 first flow path, 32 second flow path, 42 valve seat, 43 diaphragm valve, 91 check valve, 93 flow regulator, 111, 112 flow path

## Claims

1. A water discharge device, comprising
a switcher comprising a branch flow path that branches supplied water into a first flow path and a second flow path, a diaphragm valve that opens and closes the first flow path and that separates the first flow path and the second flow path, a valve seat that is formed in the first flow path and on which the diaphragm valve is seated, and an on-off valve that opens and closes the second flow path,
wherein, when the on-off valve is placed in a closed state, the diaphragm valve is separated from the valve seat, and water flows to the downstream side through the first flow path, and
wherein, when the on-off valve is placed in an open state, the diaphragm valve is seated on the valve seat and blocks the flow in the first flow path, and water flows to the downstream side through the second flow path.

2. The water discharge device according to Claim 1,
wherein a minimum cross-sectional area of a flow path cross-section in the second flow path located on the downstream side of the diaphragm valve is smaller than a minimum cross-sectional area of a flow path cross-section in the first flow path located on the downstream side of the diaphragm valve.

3. The water discharge device according to Claim 1,
wherein an additive is mixed with water on the downstream side of a flow outlet of the second flow path.

4. The water discharge device according to Claim 1,
wherein the flow outlet of the second flow path is located above the diaphragm valve in an installed state.

5. The water discharge device according to Claim 1,
wherein a flow regulator is disposed in the flow outlet of the second flow path.

6. The water discharge device according to Claim 1,
wherein a flow path located downstream of a flow outlet of the first flow path and a flow path located downstream of the flow outlet of the second flow path merge together, and water is discharged to the outside through a single discharge outlet.

7. The water discharge device according to Claim 6,
wherein a check valve is disposed on the downstream side of the valve seat in the first flow path.

8. The water discharge device according to Claim 1,
wherein the diaphragm valve is supported such as to be sandwiched between a first flow path portion that forms the first flow path and a second flow path portion that forms the second flow path.
